# FASCICULE DE BREVET EUROPEEN

(11) **EP 1 119 159 B1**
(45) Date de publication et mention de la délivrance du brevet: **30.07.2008**
(21) Numéro de dépôt: 01400080.6
(22) Date de dépôt: 12.01.2001
(51) Int. Cl.: H04M 1/27, H04M 1/73

(54) **Terminal de communication à interface homme-machine vocale**
Kommunikationsendgerät mit sprachgesteuerter Benutzerschnittstelle
Communication terminal having voice user interface

(30) Priorité: 19.01.2000 FR 0000629
(43) Date de publication de la demande: 25.07.2001
(73) Titulaire: SAGEM Communication, 75015 Paris (FR)
(72) Inventeur: Charbonnier, Philippe, 78600 Le Mesnil le Roi (FR)
(74) Mandataire: Bloch, Gérard

(56) Documents cités:
- EP-A- 0 498 398
- EP-A- 0 739 121
- EP-A- 0 833 537
- DE-U- 29 621 022
- US-A- 4 945 570

## Description

L'évolution actuelle de la téléphonie cellulaire conduit les constructeurs à réduire de plus en plus la taille des téléphones cellulaires.

Toutefois, la nécessité d'une interface homme-machine, avec un clavier et/ou un écran, limite les possibilités de réduire la taille des téléphones cellulaires.

La présente invention propose néanmoins de réduire encore la taille des téléphones cellulaires, et plus généralement des terminaux de communication.

A cet effet, l'invention concerne un terminal de communication comportant des moyens d'émission et de réception de données et des moyens d'interface homme-machine comportant un microphone et un haut-parleur, caractérisé par le fait qu'il est agencé pour fonctionner dans un état de commande vocale et dans un état de communication et pour passer de l'un à l'autre des deux états, par reconnaissance vocale d'une commande d'activation dudit autre état.

Des terminaux de communication comportant une unité de reconnaissance vocale sont connus de EP 0 739 121 et US 4 945 570.

Avec le terminal de l'invention, on s'affranchit du clavier et de l'écran. Le microphone sert à saisir non seulement le flot de données vocales d'une communication, mais également des commandes vocales. Pour permettre au terminal de distinguer les informations vocales, saisies par l'utilisateur du terminal, lors d'une communication téléphonique, et les commandes vocales, le terminal est agencé pour fonctionner dans deux états.

Dans l'état de commande vocale, le terminal cherche à reconnaître des commandes, ou instructions, vocales dans les informations vocales saisies par l'utilisateur à l'aide du microphone, afin de commander l'exécution d'une action.

Dans l'état de communication, les informations vocales, saisies par l'utilisateur à l'aide du microphone, sont émises par les moyens d'émission et de réception de données, sans que le terminal ne cherche à y reconnaître des commandes vocales.

Avantageusement, le terminal est agencé pour fonctionner dans un état de veille et il est prévu des moyens de réveil, destinés à le faire passer de l'état de veille à l'état de commande vocale.

La mise en veille du terminal permet de faire des économies d'énergie.

De préférence encore, les moyens de réveil comprennent des moyens pour reconnaître une commande vocale de réveil.

Avantageusement, les moyens de réveil comprennent des moyens de détection d'un appel téléphonique entrant.

Le terminal peut ainsi passer de l'état de veille à l'état de commande vocale, soit par saisie d'une commande vocale de réveil, soit sur détection d'un d'appel téléphonique entrant.

Dans une forme de réalisation particulière, il est prévu des moyens de temporisation, destinés à commander la mise en veille automatique du terminal, lorsque celui-ci demeure dans l'état de commande vocale, sans reconnaître de commandes vocales, pendant une durée prédéterminée.

La mise en veille automatique du terminal contribue à économiser l'énergie.

Avantageusement, il est prévu des moyens d'échappement, destinés à reconnaître une commande vocale d'échappement lorsque le terminal est dans l'état de communication et, le cas échéant, à commander le passage du terminal dans l'état de commande vocale.

Avantageusement encore, il est prévu des moyens de commande vocale destinés à reconnaître des commandes vocales, qui ne sont activés que lorsque le terminal est dans l'état de commande vocale.

Dans l'état de commande vocale, le terminal est agencé pour reconnaître des commandes vocales, saisies par l'utilisateur à l'aide du microphone. Lorsque le terminal est dans l'état de communication, l'utilisateur peut également saisir une commande vocale, par exemple une commande de raccroché téléphonique. Pour cela, il doit saisir le mot d'échappement, lequel active l'état de commande vocale, suivi du mot de commande approprié.

L'invention sera mieux comprise à l'aide de la description suivante d'une forme de réalisation particulière du terminal de l'invention, en référence au dessin annexé sur lequel:

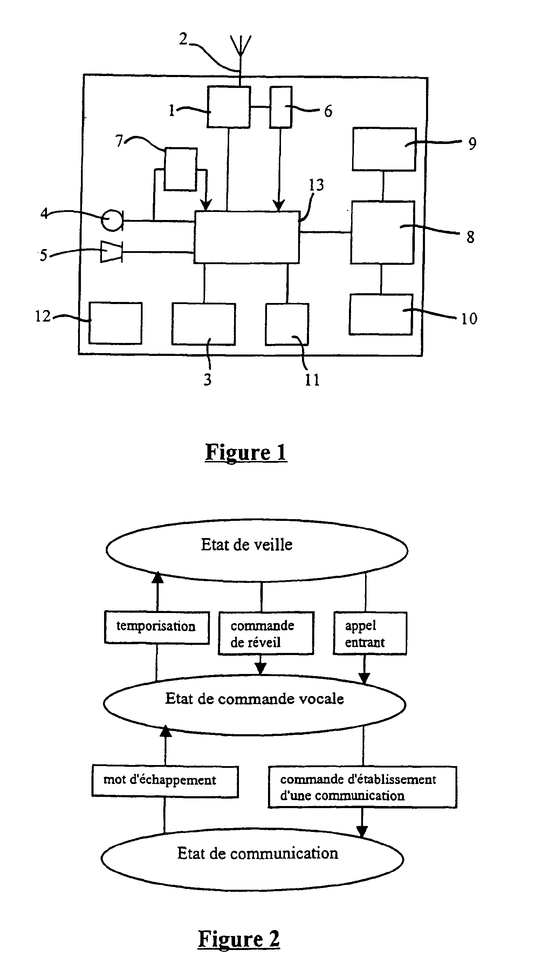

- la figure 1 représente un schéma bloc fonctionnel du terminal et
- la figure 2 représente un organigramme d'états du terminal.

Dans l'exemple particulier de la description, le terminal téléphonique est un téléphone cellulaire, ici GSM.

Le téléphone comprend un bloc radio d'émission et de réception de données 1, connecté à une antenne radio 2, un module de téléphonie 3 et une interface homme-machine exclusivement acoustique, comportant un microphone 4 et un haut parleur 5.

Le bloc radio 1 est relié à un détecteur d'appel téléphonique entrant 6.

Le module de téléphonie 3 comprend des moyens, matériels et logiciels, pour communiquer à travers un réseau de téléphonie cellulaire GSM.

Le téléphone comprend en outre un filtre acoustique de réveil 7 et un dispositif de reconnaissance vocale 8, dont l'exploitation est partagée par un bloc de commande vocale 9 et un bloc d'échappement 10.

Le bloc de commande vocale 9, en coopération avec le dispositif 8 de reconnaissance vocale, est destiné à reconnaître des commandes, ou instructions, vocales d'exécution d'une action, saisies par un utilisateur à l'aide du microphone 4. Ces commandes vocales comprennent des mots de commande et éventuellement des chiffres, par exemple un numéro d'appel téléphonique.

Comme commandes vocales, on citera, par exemple,
- une commande de numérotation téléphonique comprenant le numéro d'appel téléphonique suivi du mot de commande "envoi",
- une commande de décroché téléphonique comprenant le mot de commande "décroche",
- une commande de raccroché téléphonique comprenant le mot de commande "raccroche".

En cas de reconnaissance d'une commande vocale, le bloc de commande vocale 9 commande l'exécution de l'action commandée.

Le bloc d'échappement 10, en coopération avec le dispositif 8 de reconnaissance vocale, est destiné à reconnaître une commande vocale d'échappement, constituée ici par un mot d'échappement, peu usité dans le langage courant, saisie par l'utilisateur à l'aide du microphone 4. En cas de reconnaissance du mot d'échappement, sous la commande du bloc d'échappement 10, le téléphone passe d'un état de communication à un état de commande vocale, comme explicité plus loin.

Le filtre acoustique 7, relié au microphone 4, est un dispositif rudimentaire de reconnaissance acoustique, capable de reconnaître une commande vocale de réveil, saisie par le microphone 4, constituée ici par le mot "marche".

Le téléphone comprend également un temporisateur 11, destiné à commander la mise en veille automatique du téléphone en cas d'inactivité prolongée, comme explicité plus loin.

Enfin, le téléphone comprend une batterie d'alimentation 12.

Tous les éléments du téléphone sont reliés à un bloc de commande 13, en l'espèce un microcontrôleur, destiné à commander le fonctionnement du téléphone.

Le téléphone a trois états de fonctionnement: un état de veille, un état de commande vocale et un état de communication.

### 1) Etat de veille

Le filtre 7 est en permanence sous tension. Il reçoit et filtre les informations acoustiques, saisies à l'aide du microphone 4, et tente d'y détecter la commande vocale de réveil "marche". En cas de détection de cette commande, le filtre 7 transmet au microcontrôleur 13 un signal de réveil.

Dans l'état de veille, le microcontrôleur 13, le bloc radio 1 et le détecteur 6 sont en veille mais ils sont périodiquement réveillés, c'est-à-dire mis sous tension, afin de détecter un éventuel appel téléphonique entrant. En cas de détection d'un appel entrant, le détecteur 6 transmet au microcontrôleur 13 un signal de réveil.

En revanche, dans l'état de veille, le dispositif 8 de reconnaissance vocale n'est pas alimenté en énergie et ne fonctionne donc pas.

Sur réception d'un signal de réveil, le microcontrôleur 13 réveille le dispositif de reconnaissance vocale 8, en commandant sa mise sous tension, et active le bloc de commande vocale 9. Le téléphone passe ainsi de l'état de veille à l'état de commande vocale.

### 2) Etat de commande vocale

Dans l'état de commande vocale, le dispositif de reconnaissance vocale 8 est sous tension, autrement dit il fonctionne, et le bloc de commande vocale 9 est activé.

Le bloc de commande vocale 9, en coopération avec le dispositif de reconnaissance vocale 8, cherche à reconnaître des mots de commande, parmi les informations vocales saisies par l'utilisateur à l'aide du microphone 4. Un utilisateur peut ainsi commander vocalement le téléphone pour qu'il exécute différentes actions (appeler, répondre à un appel téléphonique entrant, etc.).

A titre d'exemple illustratif, on va décrire ci-après comment se déroule un processus d'appel téléphonique et un processus de réception d'un appel téléphonique.

Pour appeler un correspondant, l'utilisateur, après avoir réveillé le téléphone en saisissant le mot de réveil "marche", saisit le numéro de ce dernier puis le mot de commande "envoi", à l'aide du microphone 4. Sur reconnaissance de l'instruction de numérotation téléphonique, le téléphone appelle le numéro saisi puis passe de l'état de commande vocale à l'état de communication.

En cas de réception d'un appel téléphonique, le téléphone passe de l'état de veille à l'état de commande vocale, comme explicité plus haut, et sonne. Pour prendre l'appel, l'utilisateur saisit le mot de commande "décroche", à l'aide du microphone 4. Sur reconnaissance de l'instruction de décroché téléphonique, le téléphone décroche, en établissant ainsi la communication téléphonique avec l'appelant, et passe de l'état de commande vocale à l'état de communication.

On soulignera ici que les mots de commande "envoi" et "décroche", qui sont des commandes d'établissement d'une communication, constituent des commandes d'activation de l'état de communication, c'est-à-dire des instructions sous la commande desquelles le téléphone passe de l'état de commande vocale à l'état de communication.

### 3) Etat de communication

Dans l'état de communication, le téléphone est en cours de communication téléphonique. Le dispositif de reconnaissance vocale 8 est alimenté en énergie et fonctionne.

Le bloc de commande vocale 9 est inactivé. Il en résulte que toutes les informations vocales saisies par l'utilisateur, à l'aide du microphone 4, sont émises par le bloc radio 1 à travers le réseau téléphonique.

En revanche, le bloc d'échappement 10 est activé et cherche, en coopération avec le bloc de reconnaissance vocale 8, à reconnaître le mot d'échappement parmi les informations vocales saisies à l'aide du microphone 4.

Pour saisir une commande lorsque le téléphone est en cours de communication téléphonique, l'utilisateur saisit le mot d'échappement suivi d'un mot de commande. Sur reconnaissance du mot d'échappement, le bloc de commande vocale 9 est activé et reconnaît le mot de commande, saisi après le mot d'échappement. Le téléphone revient ensuite éventuellement dans l'état de communication.

Grâce au mot d'échappement, on peut activer l'état de commande de vocale et ainsi saisir une commande vocale, même lorsque le téléphone est en cours de communication téléphonique.

Par exemple, pour mettre fin à une communication téléphonique en cours, l'utilisateur saisit le mot d'échappement suivi du mot de commande "raccroche", à l'aide du microphone 4. Sur reconnaissance du mot d'échappement, le bloc de commande vocale 9 est activé et, en coopération avec le dispositif de reconnaissance vocale 8, il reconnaît la commande de raccroché et commande au téléphone de raccrocher. La communication téléphonique est ainsi interrompue. Dans ce cas, après avoir raccroché, le téléphone reste dans l'état de commande vocale.

Lorsque le téléphone demeure dans l'état de commande vocale, sans reconnaître de commande vocale, pendant une durée prédéterminée, le temporisateur 11 commande la mise en veille automatique du téléphone, autrement dit son retour à l'état de veille.

On soulignera que le bloc de commande vocale 9 n'est activé que lorsque le téléphone est dans l'état de commande vocale.

Dans la description qui précède, l'utilisateur du téléphone doit saisir le mot d'échappement suivi du mot de commande de raccroché pour raccrocher. On pourrait imaginer de ne saisir qu'un mot, constituant une commande vocale de mise en veille, sous la commande duquel le téléphone raccrocherait et passerait de l'état de commande à l'état de veille, en passant fugitivement par l'état de commande vocale. En fait, le mot de mise en veille constituerait une commande vocale à la fois d'échappement et de raccroché téléphonique. Dans ce cas, le téléphone comprendrait un bloc de mise en veille destiné, en coopération avec le dispositif de reconnaissance vocale, à reconnaître le mot de mise en veille, lorsque le téléphone est dans l'état de communication, et, en cas de reconnaissance de ce mot, à commander le passage du téléphone de l'état de communication à l'état de veille, en passant fugitivement par l'état de commande vocale.

L'invention pourrait s'appliquer à tout type de terminal de communication, filaire ou radio.

On pourrait prévoir d'autres moyens de réveil, comme par exemple un accéléromètre capable de détecter un entraînement en mouvement du terminal, telle qu'une secousse.

## Revendications

1. Terminal de communication comportant des moyens (1) d'émission et de réception de données et des moyens d'interface homme-machine comportant un microphone (4) et un haut-parleur (5), **caractérisé par le fait qu'**il est agencé pour fonctionner dans un état de commande vocale et dans un état de communication et pour passer de l'un à l'autre des deux états, par reconnaissance vocale d'une commande d'activation dudit autre état.

2. Terminal selon la revendication 1, dans lequel le terminal est agencé pour fonctionner dans un état de veille et il est prévu des moyens de réveil (6, 7), destinés à le faire passer de l'état de veille à l'état de commande vocale.

3. Terminal selon la revendication 2, dans lequel les moyens de réveil comprennent des moyens (7) pour reconnaître une commande vocale de réveil.

4. Terminal selon l'une des revendications 2 et 3, dans lequel les moyens de réveil comprennent des moyens (6) de détection d'un appel téléphonique entrant.

5. Terminal selon l'une des revendications 2 à 4, dans lequel les moyens de réveil comprennent des moyens de détection d'un entraînement en mouvement du terminal.

6. Terminal selon l'une des revendications 2 à 5, dans lequel il est prévu des moyens de temporisation (11), destinés à commander la mise en veille automatique du terminal, lorsque celui-ci demeure dans l'état de commande vocale, sans reconnaître de commandes vocales, pendant une durée prédéterminée.

7. Terminal selon l'une des revendications 1 à 6, dans lequel il est prévu des moyens d'échappement (8, 10), , destinés à reconnaître une commande vocale d'échappement lorsque le terminal est dans l'état de communication et, le cas échéant, à commander le passage du terminal dans l'état de commande vocale.

8. Terminal selon l'une des revendications 1 à 7, dans lequel il est prévu des moyens de commande vocale (8, 9), destinés à reconnaître des commandes vocales lorsque le terminal est dans l'état de commande vocale.

9. Terminal selon l'une des revendications 1 à 8, dans lequel il est prévu des moyens de mise en état de veille destinés à reconnaître une commande de mise en veille lorsque le terminal est dans l'état de communication et, le cas échéant, à commander le passage du terminal dans l'état de veille, en passant fugitivement par l'état de commande vocale.

## Claims

1. Communication terminal comprising means (1) for transmitting and receiving data and man-machine interface means comprising a microphone (4) and a loudspeaker (5), **characterised in that** it is provided in order to function in a voice-activated mode and in a communication mode and in order to pass from one to the other of the two modes by voice recognition of an activation command of said other mode.

2. Terminal according to claim 1, in which the terminal is provided in order to function in a standby mode and there are provided wake-up means (6, 7) which are intended to make it pass from standby mode to voice-activated mode.

3. Terminal according to claim 2, in which the wake-up means comprise means (7) for recognising a voice-activated wake-up command.

4. Terminal according to one of the claims 2 and 3, in which the wake-up means comprise means (6) for detecting an incoming telephone call.

5. Terminal according to one of the claims 2 to 4, in which the wake-up means comprise means for detecting an event of movement of the terminal.

6. Terminal according to one of the claims 2 to 5, in which there are provided timing means (11) which are intended to control the automatic wake-up of the terminal, when the latter remains in voice-activated mode, without recognising voice-activated commands, for a predetermined duration.

7. Terminal according to one of the claims 1 to 6, in which there are provided escape means (8, 10) which are intended to recognise a voice-activated escape command when the terminal is in communication mode and, if necessary, to control the passage of the terminal into voice-activated mode.

8. Terminal according to one of the claims 1 to 7, in which there are provided voice-activated means (8, 9) which are intended to recognise voice-activated commands when the terminal is in voice-activated mode.

9. Terminal according to one of the claims 1 to 8, in which there are provided means for putting in standby mode which are intended to recognise a standby command when the terminal is in communication mode and, if necessary, to control the passage of the terminal into standby mode, by passing fleetingly through the voice-activated mode.

## Patentansprüche

1. Kommunikationsendgerät mit Mitteln (1) zur Sendung und zum Empfang von Daten und mit ein Mikrofon (4) und einen Lautsprecher (5) aufweisenden Mensch-Maschine-Schnittstellenmitteln, **dadurch gekennzeichnet, dass** es dafür eingerichtet ist, um in einem Sprachsteuerzustand und in einem Kommunikationszustand zu arbeiten und bei Spracherkennung eines Befehls zur Aktivierung des anderen Zustands von einem der beiden Zustände in den anderen überzugehen.

2. Endgerät nach Anspruch 1, wobei das Endgerät eingerichtet ist, um in einem Stand-by-Zustand zu arbeiten und wobei Weckmittel (6, 7) vorgesehen sind, die dazu bestimmt sind, es von dem Stand-by-Zustand in den Sprachsteuerzustand übergehen zu lassen.

3. Endgerät nach Anspruch 2, wobei die Weckmittel Mittel (7) zum Erkennen eines Wecksprachbefehls aufweisen.

4. Endgerät nach einem der Ansprüche 2 oder 3, wobei die Weckmittel Mittel (6) zur Erfassung eines eingehenden Telefonanrufs aufweisen.

5. Endgerät nach einem der Ansprüche 2 bis 4, wobei die Weckmittel Mittel zur Erfassung einer Mitnahme des Endgeräts bei einer Bewegung aufweisen.

6. Endgerät nach einem der Ansprüche 2 bis 5, wobei Zeitgebermittel (11) vorgesehen sind, die dazu bestimmt sind, das automatische Einschalten des Endgeräts in den Stand-by-Zustand zu steuern, wenn es während einer vorgegebenen Zeitdauer in dem Sprachsteuerzustand bleibt, ohne Sprachbefehle zu erkennen.

7. Endgerät nach einem der Ansprüche 1 bis 6, wobei Umschaltmittel (8, 10) vorgesehen sind, die zum Erkennen eines Umschaltsprachbefehls bestimmt sind, wenn sich das Endgerät in dem Kommunikationszustand befindet, und gegebenenfalls zum Steuern des Übergangs des Endgeräts in den Sprachsteuerzustand.

8. Endgerät nach einem der Ansprüche 1 bis 7, wobei Sprachsteuermittel (8, 9) vorgesehen sind, die dazu bestimmt sind, Sprachbefehle zu erkennen, wenn sich das Endgerät im Sprachsteuerzustand befindet.

9. Endgerät nach einem der Ansprüche 1 bis 8, wobei Mittel zum Einschalten des Stand-by-Zustands vorgesehen sind, die dazu bestimmt sind, einen Befehl zum Einschalten des Stand-by-Zustands zu erkennen, wenn sich das Endgerät in dem Kommunikationszustand befindet, und gegebenenfalls den Übergang des Endgeräts in den Stand-by-Zustand zu steuern, wobei vorübergehend der Sprachsteuerzustand durchlaufen wird.
